# EUROPÄISCHE PATENTSCHRIFT

(11) **EP 3 275 701 B1**
(45) Veröffentlichungstag und Bekanntmachung des Hinweises auf die Patenterteilung: **26.09.2018**
(21) Anmeldenummer: 17183178.7
(22) Anmeldetag: 26.07.2017
(51) Int. Cl.: B60C 23/04

(54) **BEFESTIGUNGSVORRICHTUNG ZUM BEFESTIGEN EINES MESSSENSORS, INSBESONDERE REIFENDRUCKSENSORS**
FASTENING DEVICE FOR FASTENING A MEASUREMENT SENSOR, IN PARTICULAR TIRE PRESSURE SENSOR
DISPOSITIF DE FIXATION D'UN CAPTEUR DE MESURE, EN PARTICULIER CAPTEUR DE PRESSION DE PNEU

(30) Priorität: 29.07.2016 DE 102016214089
(43) Veröffentlichungstag der Anmeldung: 31.01.2018
(73) Patentinhaber: Alligator Ventilfabrik GmbH, 89537 Giengen (DE)
(72) Erfinder: Markert, Christian, 89542 Herbrechtingen (DE)
(74) Vertreter: Dr. Weitzel & Partner

(56) Entgegenhaltungen:
- WO-A1-2013/034969
- WO-A1-2015/055479
- DE-A1- 3 027 059

## Beschreibung

Die vorliegende Erfindung betrifft eine Befestigungsvorrichtung zum Befestigen eines Messsensors, insbesondere Reifendrucksensors innerhalb eines Reifenhohlraumes gemäß dem Oberbegriff der unabhängigen Patentansprüche.

Reifendrucksensoren werden innerhalb des Reifenhohlraumes am Reifen oder an einer Fahrzeugfelge befestigt, um im Betrieb des Fahrzeugs den Luftdruck im Reifen beziehungsweise Reifenhohlraum fortlaufend oder in Intervallen zu erfassen. Der mit dem Reifendrucksensor erfasste Luftdruck wird mittels einer im Reifendrucksensor integrierten Sendeeinrichtung an einen Empfänger im Fahrzeug gesendet und ausgewertet, sodass bei einem unzulässigen Druckabfall eine Warnmeldung ausgegeben werden kann.

Herkömmlich erfolgt eine Befestigung eines entsprechenden Reifendrucksensors an der Felge entweder durch einen mechanischen, vorteilhaft gelenkigen Anschluss des Reifendrucksensors am inneren Ende des Reifenventils. Nachteilig ist, dass hierfür Sonderkonstruktionen der Ventile notwendig sind und aufgrund der Positionierung außerhalb des so genannten Tiefbetts der Felge die Gefahr besteht, dass der Reifendrucksensor beim Ab- oder Aufziehen des Reifens von der oder auf die Felge beschädigt wird. Ein Beispiel für einen solchen am Reifenventil befestigten Reifendrucksensor wird in der EP 0 751 017 A2 offenbart.

DE 10 2006 038 059 A9 beschreibt die Befestigung eines Reifendrucksensors an einer Kraftfahrzeugfelge mittels eines Klebestreifens. Hierfür wird ein Sockel mittels des Klebestreifens von außen im Tiefbett der Felge angeklebt. Auf dem Sockel kann dann der Reifendrucksensor befestigt werden. Zur Sicherung kann ein Verzurrgurt über der Felge durch den Sockel geführt werden, der mit einem Gurtschloss, das als Einweg- oder Mehrwegartikel ausgeführt sein kann, über dem Umfang der Felge verschlossen ist. Als Gurtschloss kommt beispielsweise ein Crimpschloss oder ein Versenkschloss oder auch ein Schneckengetriebeverschluss in Betracht. Der Klebestreifen ist in der Regel ein doppelseitiges Klebeband. Somit erfolgt die primäre Befestigung des Reifendrucksensors mit dem Klebeband, was zuverlässig verhindert, dass sich der Reifendrucksensor auf der Felge verschiebt. Starke Fliehkräfte, welche den Sockel vom Klebeband oder das Klebeband von der Felge lösen könnten, werden durch den Gurt kompensiert.

Einen hiervon abweichenden Ansatz beschreibt die DE 10 2010 037 597 A1. Gemäß der dort dargestellten Befestigungsvorrichtung zum Befestigen eines Reifenmoduls, insbesondere Luftdrucksensors, für Reifen soll vermieden werden, dass das Reifenmodul an der Fahrzeugfelge anliegt. Vielmehr soll sich das Reifenmodul frei im Inneren des Reifenhohlraums positionieren, um die Qualität der gemessenen Temperatur der Luft im Reifenhohlraum dadurch zu verbessern, dass die gemessene Temperatur nicht durch die Temperatur der Fahrzeugfelge beeinflusst wird. Das Modul soll wärmetechnisch sowohl vom Reifen als auch von der Fahrzeugfelge abgekoppelt sein. Hierfür wird, ausgehend von Ansätzen, bei denen das Reifenmodul ohne Befestigung im Reifenhohlraum angeordnet ist, vorgeschlagen, das Reifenmodul frei beweglich an einem bandartigen Haltemittel anzuordnen, wobei das bandartige Haltemittel im Wesentlichen koaxial an der Fahrzeugfelge im Reifenhohlraum angeordnet ist, wodurch das Reifenmodul bei Rotation des Fahrzeugreifens zur Reifeninnenseite und von der äußeren Umfangsseite der Fahrzeugfelge beabstandet ist. Demgemäß wird das Reifenmodul weder an der Felge noch auf der Reifeninnenseite befestigt, beispielsweise über einen entsprechenden Klebeprozess. Das bandartige Haltemittel wird lose um die Fahrzeugfelge geschlungen und lose an ihr befestigt. Um ein abriebbeständiges, hochfestes, temperaturbeständiges und luftdurchlässiges Haltemittel zu erreichen, kann dieses aus einem Kunstfasermaterial bestehen. Die einander gegenüberliegenden Enden des bandartigen Haltemittels können bei der Montage an der Fahrzeugfelge mit einem Klettverschluss verbunden werden und das Reifenmodul kann in einer verschließbaren Tasche am bandartigen Haltemittel angeordnet sein.

Die vorliegende Erfindung betrifft ausschließlich eine Befestigungsvorrichtung zum Befestigen eines Messdrucksensors innerhalb eines Reifenhohlraums an einer Fahrzeugfelge, bei welchem der Messdrucksensor, insbesondere Reifendruckmesser fest an der Oberfläche der Fahrzeugfelge verspannt wird, da bei einer optional vorgesehenen Temperaturmessung gerade die Felgentemperatur mit berücksichtigt werden soll. Gegenüber dem Stand der Technik mit Crimp- Versenk- oder Schneckengetriebegurtschlössern und mit in der Regel aus Metall hergestellten Gurtbändern, wobei die primäre Befestigung des Reifendrucksensors durch Kleben an der Felge erfolgt, soll die Montage jedoch schneller und komfortabler sowie felgenschonender erfolgen können und besonders große Durchmesserbereiche verschiedener Felgen sollen mit einer einzigen Befestigungsvorrichtung abgedeckt werden können. Zugleich sollen die eingangs genannten Nachteile, die bei Befestigungen von Reifendrucksensoren an Ventilen vorherrschen, vermieden werden.

US 2005/0242937 A1 offenbart ein Gummiband oder einen Gummiring, das/der an der Felge befestigt wird, um einen Reifendruckaufnehmer zu halten. Der Reifendruckaufnehmer (Transmitter) kann anvulkanisiert werden oder in einem vorgesehen Sockel montiert werden. US 2005/0242937 A1 offenbart ferner einen mit Druckgas befüllten Schlauch zum Befestigen des Transmitters, wobei der Schlauch innen am Reifen anliegt und somit den Transmitter mit Abstand zum Reifen trägt.

DE 195 429 289 A1 offenbart ein dehnbares Textil, um einen Reifendruckaufnehmer an einer Fahrzeugfelge zu befestigen.

Die vorgenannten Ausführungsformen weisen den Nachteil auf, dass sie im praktischen Einsatz nicht sicher die notwendige Verspannung beziehungsweise eine ausreichende Spannkraft in jedem Betriebszustand und bei jeder Temperatur sicherstellen können. Ferner ist die Herstellung immer noch vergleichsweise kostenaufwändig.

Zum weiteren Stand der Technik wird verwiesen auf:
US 2004/0155764 A1
DE 10 2008 060 542 B3
US 5 541 574 A
US 4 507 956 A
GB 2 016 383 A
DE 20 2012 103 179 U1
DE 100 07 375 C2
DE 10 2013 221 225 A1

Dabei offenbart US 2004/0155764 A1 ein Gummiband zum Befestigen eines Reifendrucksensors. DE 10 2008 060 542 B3 offenbart einen Spanngurt aus Federstahl, der einzelne radial nach außen gebogene Abschnitte aufweist, um zum Ausgleich von Toleranzen Zonen geringerer Elastizität einzubringen. Am Federstahl wird ein Sockel befestigt, der einen Sensor aufnehmen kann.

Der vorliegenden Erfindung liegt daher die Aufgabe zugrunde, eine Befestigungsvorrichtung zum Befestigen eines Messsensors, insbesondere Reifendrucksensors innerhalb eines Reifenhohlraumes an einer Fahrzeugfelge anzugeben, die an Felgen verschiedener Felgendurchmesser und Gestaltungen universell verwendbar ist und sowohl bei der Erstinstallation durch Fahrzeughersteller als auch beim Nachrüsten in Werkstätten komfortabel verwendet werden kann.

Die erfindungsgemäße Aufgabe wird durch eine Befestigungsvorrichtung mit den Merkmalen der unabhängigen Patentansprüche gelöst. In den abhängigen Ansprüchen sind vorteilhafte und besonders zweckmäßige Ausgestaltungen der Erfindung angegeben.

Gemäß einer ersten Ausführungsform der Erfindung weist eine erfindungsgemäße Befestigungsvorrichtung zum Befestigen eines Messsensors, wie Reifendrucksensors innerhalb eines Reifenhohlraumes an einer Fahrzeugfelge einen bandförmigen Spanngurt auf, der eine Aufnahmeeinrichtung für den Messsensor umfasst. Der bandförmige Spanngurt weist ein elastisches Material auf.

Der bandförmige Spanngurt ist in Form eines über seinem Umfang geschlossenen, nur abschnittsweise elastischen Endlosbandes vorgesehen. Das bedeutet, dass nur einzelne Umfangsabschnitte des bandförmigen Spanngurtes elastisch sind, während zwischen den elastischen Umfangsabschnitten nichtelastische Umfangsabschnitte des Spanngurtes vorgesehen sind. Zumindest ist wenigstens ein elastischer Umfangsabschnitt des Spanngurtes vorgesehen sowie ein sich anschließender nicht-elastischer Umfangsabschnitt des Spanngurtes.

Dadurch, dass nicht der gesamte bandförmige Spanngurt beziehungsweise der Spanngurt über seinem gesamten Umfang aus einem elastischen Material hergestellt ist, sondern zumindest ein Umfangsbereich oder Umfangsbereiche existieren, die nicht elastisch sind, können besonders hohe Verspannkräfte erreicht werden und Ermüdungen durch nachlassende Elastizität können reduziert werden. Die Umfangsrichtung des bandförmigen Spanngurtes bezieht sich dabei im Rahmen der vorliegenden Beschreibung auf die Umschlingungsrichtung des bandförmigen Spanngurtes um die Fahrzeugfelge, an welcher der Spanngurt verspannt wird.

Wenn vorliegend von nicht-elastischen Abschnitten des spannförmigen Spanngurtes die Rede ist, so erfolgt bei diesen Abschnitten beim Aufziehen des Spanngurtes und Verspannen des Spanngurtes durch die elastischen Abschnitte keine Verlängerung der nicht-elastischen Abschnitte, im Gegensatz zu einer Dehnung der elastischen Abschnitte. Ein Elastizitätsmodul der nicht-elastischen Abschnitte ist somit derart größer als jenes der elastischen Abschnitte, dass im bestimmungsgemäßen Gebrauch des Spanngurtes eine elastische Verlängerung und Verkürzung nur der elastischen Abschnitte oder des wenigstens einen elastischen Abschnitts erfolgt. Die Elastizität des wenigstens einen elastischen Abschnittes ist somit um ein Vielfaches größer als die Elastizität des wenigstens einen nicht-elastischen Abschnitts.

Gemäß dieser erfindungsgemäßen Ausführungsform wird die Aufnahmeeinrichtung durch eine Tasche aus einem elastischen Material gebildet. Der Spanngurt ist insbesondere aus einem textilen Material hergestellt.

Die Tasche ist insbesondere integral mit einem elastischen Abschnitt des Endlosbandes ausgeführt. Beispielsweise weist dieser Abschnitt die Form eines elastischen Schlauches auf, in dessen Schlauchinnenraum der Messsensor aufgenommen werden kann, beispielsweise durch Einschieben durch eine Eintrittsöffnung des elastischen Schlauches.

Gemäß einer alternativen erfindungsgemäßen Ausführungsform ist der bandförmige Spanngurt insgesamt als elastischer Schlauch ausgeführt, dessen Schlauchinnenraum die Aufnahmeeinrichtung für den Messsensor bildet. Auch der Schlauch erstreckt sich somit in Umfangsrichtung der Fahrzeugfelge beziehungsweise, wie zuvor definiert, in Umfangsrichtung des Spanngurtes. Der elastische Schlauch und somit der bandförmige Spanngurt sind aus einem textilen Material hergestellt.

Auch hier ist es günstig, wenn der elastische Schlauch eine Eintrittsöffnung, insbesondere in Umfangsrichtung gesehen auf seiner radial inneren oder radial äußeren Seite aufweist, über welche der Messsensor in den Schlauchinnenraum einschiebbar ist.

Die Eintrittsöffnung kann derart in dem elastischen Schlauch ausgeführt sein, dass sie beim Spannen des Schlauches in der Umfangsrichtung des Spanngurtes durch Aufziehen des Spanngurtes auf die Fahrzeugfelge verschlossen wird. Dies betrifft beide zuvor genannten Ausführungsformen. Das Verspannen kann ein Verschließen des Querschnitts der Eintrittsöffnung bewirken, weil der Schlauch in diesem Bereich in die Länge gezogen wird. Hierfür erstreckt sich die Eintrittsöffnung vorteilhaft mit ihrer Längsrichtung in der Umfangsrichtung des Spanngurtes. Zusätzlich oder alternativ kann die Eintrittsöffnung dadurch verschlossen werden, dass sie durch das Verspannen des Spanngurtes gegen die Felgenoberfläche gepresst wird.

Besonders günstig ist, wenn der elastische Schlauch derart ausgeführt ist, dass der Schlauchinnenraum beim Spannen des Schlauches in der Umfangsrichtung des Spanngurtes durch Aufziehen des Spanngurtes auf die Fahrzeugfelge in seinem Querschnitt derart reduziert wird, dass der Messsensor in dem Schlauch beziehungsweise in dem Schlauchinnenraum verspannt wird. Durch dieses Verspannen des Messsensors innerhalb des Schlauches wird ein Verrutschen des Messsensors innerhalb des Schlauchinnenraumes vermieden.

Der Spanngurt kann bei der Ausgestaltung als Schlauch entweder als Endlosband ausgeführt sein, alternativ jedoch auch als Band mit zwei miteinander verbindbaren Enden. Im letzteren Fall ist vorteilhaft ein geeigneter Verschluss vorgesehen, um die beiden einander entgegengesetzten Enden miteinander zu verbinden.

Gemäß einer Ausführungsform der Erfindung ist der Schlauchinnenraum in der Umfangsrichtung des Spanngurtes in einzelne voneinander getrennte Abschnitte unterteilt. Die Unterteilung kann beispielsweise durch Vernähen des Schlauches quer zur Umfangsrichtung des Spanngurtes erfolgen. Andere Unterteilungen kommen in Betracht.

Günstig ist dabei, wenn der Schlauchinnenraum einen abgetrennten Abschnitt aufweist, der die Aufnahmeeinrichtung bildet. In anderen Worten bildet eine der Unterteilungen eine Tasche, nämlich elastische Tasche, in die der Messsensor eingeschoben werden kann und im Betrieb der Fahrzeugfelge dort gehalten wird. Entsprechend ist in diesem Abschnitt auch die Eintrittsöffnung vorgesehen.

Generell kommen jedoch bei der vorstehend beschriebenen Gestaltung wie auch bei den anderen hier beschriebenen Gestaltungen Ausführungsformen der Erfindung in Betracht, bei welchen der Messsensor nicht einschiebbar und/oder herausnehmbar in dem Spanngurt eingeschlossen ist, beispielsweise in dem Schlauchinnenraum oder der Tasche eingenäht ist, oder bei welchen der Messsensor unlösbar außen auf dem Spanngurt befestigt ist, insbesondere stoffschlüssig wie durch Kleben oder Anvulkanisieren.

Gemäß einer weiteren erfindungsgemäßen Ausgestaltung ist der bandförmige Spanngurt als textiles Endlosband ausgeführt, das in der Umfangsrichtung des Spanngurtes beziehungsweise der Umschlingungsrichtung der Fahrzeugfelge wenigstens abschnittsweise elastisch ist.

Das textile Endlosband kann beispielsweise gewebt oder gewirkt sein, das heißt durch Weben oder Wirken hergestellt sein. Jedoch kommen auch andere Herstellungsverfahren in Betracht, beispielsweise Stricken oder Filzen.

Gemäß einer Ausführungsform ist der Spanngurt über seiner gesamten Länge in Umfangsrichtung aus einem elastischen Textil hergestellt.

Beispielsweise ist das Gehäuse des Messsensors direkt oder über ein mit dem Sensor lösbar oder unlösbar verbundenes Zwischenelement am Spanngurt angenäht. Das Sensorgehäuse oder das Zwischenelement kann auch insbesondere mit einer ersten Seite an einem ersten Spanngurtende und einer zweiten, insbesondere der ersten Seite gegenüberliegenden Seite an einem zweiten Spanngurtende angeschlossen sein, beispielsweise durch Vernähen.

Wenn der bandförmige Spanngurt nicht als Endlosband ausgeführt ist, sondern zwei freie Enden aufweist, die in Umfangsrichtung entgegengesetzt zueinander positioniert sind, so sind diese Enden vorteilhaft über einen Magnetverschluss miteinander verbindbar, um den Spanngurt über dem Umfang der Fahrzeugfelge zu verspannen. Die Magneten können im verschlossenen Zustand aufeinander aufliegen, beispielsweise in Radialrichtung der Felge, das heißt senkrecht zur Längsrichtung (Umfangsrichtung) des Spanngurtes. Die Magneten können auch ineinander eingreifen, insbesondere mittels aufeinander abgestimmten profilierten Oberflächen, um eine Hinterschneidung zu bilden. Eine solche profilierte Oberfläche verstärkt die Verschlusskraft.

Ferner ist es besonders mit einer profilierten Oberfläche der Magneten leicht und sicher möglich, die geschlossene Spanngurtlänge variabel auf verschiedene Felgendurchmesser anzupassen, wenn nämlich der Magnetverschluss verschiedene magnetische Raststellungen aufweist, um die verschiedenen Längen einzustellen.

Insbesondere wenn bei den verschiedenen erfindungsgemäßen Gestaltungen eine Position für den Messsensor im Spanngurt fest vorgegeben ist, beispielsweise durch einen Sockel oder eine Tasche, so kann im montierten Zustand des Spanngurtes beispielsweise radial gegenüberliegen eine Ausgleichsgewicht vorgesehen sein, um eine Unwucht zu reduzieren oder vermeiden. Das Gewicht kann bei ein Spanngurt mit zwei Enden insbesondere durch den Verschluss gebildet werden.

Bei den dargestellten erfindungsgemäßen Ausführungsformen erstreckt sich der bandförmige Spanngurt vorteilhaft über seiner gesamten Länge anliegend an einer radial äußeren Oberfläche der Fahrzeugfelge, d.h. zumindest im Wesentlichen ausschließlich in Umfangsrichtung, ohne dass Bereiche vorgesehen sind, in denen sich der Spanngurt radial weg von der Fahrzeugfelge erstreckt.

Die Erfindung soll nachfolgend anhand von Ausführungsbeispielen und den Figuren exemplarisch erläutert werden:

Es zeigen:
- Figur 1: ein Ausführungsbeispiel einer ersten erfindungsgemäßen Gestaltung;
- Figur 2: eine zweite Ausführungsform der Erfindung mit einem schlauchförmigen Spanngurt;
- Figur 3: eine Ausgestaltung der Erfindung mit schlauchförmigem Spanngurt, der als Endlosschlauch ausgeführt ist;
- Figur 4: eine weitere Gestaltung der Erfindung mit einem textilen Endlosband.

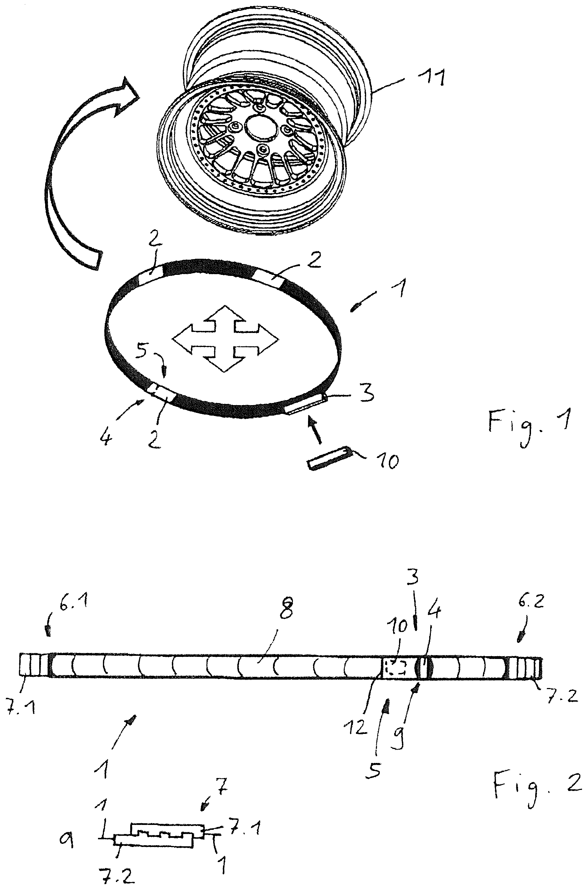

In der Figur 1 ist eine erste Ausführungsform der Erfindung gezeigt, bei welcher die Befestigungsvorrichtung einen bandförmigen Spanngurt 1 aufweist, der als Endlosband ausgeführt ist, mit nur einzelnen elastischen Abschnitten 2. Die Abschnitte des Spanngurtes 1 in Umfangsrichtung zwischen den elastischen Abschnitten 2 sind hingegen aus einem nicht elastischen Material hergestellt.

Die elastischen Abschnitte 2, deren Anzahl von der hier gezeigten Anzahl, nämlich drei, abweichen kann, wobei mindestens ein elastischer Abschnitt 2 vorgesehen ist, ermöglichen, dass der Spanngurt 1 aufgeweitet wird und über den Felgenrand auf eine Fahrzeugfelge 11 gezogen wird, sodass er im Felgenbett aufgrund der Elastizität gegen den äußeren Umfang der Felge beziehungsweise des Felgenbetts verspannt ist. Dieses Aufziehen wird durch den dicken Pfeil in der Figur 1 symbolisiert, der Vierfach-Pfeil symbolisiert das Aufweiten des Spanngurtes 1 zum Überziehen über den Felgenrand.

Der Spanngurt 1 weist eine Aufnahmeeinrichtung 3 auf, in welche der Messsensor 10 vor oder nach der Montage des Spanngurtes 1 auf der Felge 11 eingesetzt werden kann, lösbar oder unlösbar. Die Aufnahmeeinrichtung 3 kann beispielsweise in Form eines Sockels oder Adapters vorgesehen sein, wie dies in der Figur 1 dargestellt ist. Gemäß einer weiteren Ausführungsform ist die Aufnahmeeinrichtung 3 durch eine Tasche aus elastischem Material gebildet, beispielsweise in einen der elastischen Abschnitte 2 integriert. Dies ist schematisch durch die gestrichelte Linie in einem der elastischen Abschnitte 2 gezeigt, wobei die gestrichelte Linie eine Eintrittsöffnung 4, die auch Einschuböffnung genannt werden könnte, darstellt, durch welche der Messsensor 10 dann in die entsprechende elastische Tasche, hier mit 5 bezeichnet, eingesetzt werden könnte. Auch eine Ausgestaltung ohne Eintrittsöffnung 4, mit fest integriertem Messsensor 10 in der elastischen Tasche 5 ist möglich.

Bei der Ausgestaltung der Figur 2, welche Ausgestaltung ohne geschlossenen Endlosband über seinem Umfang keine Ausführungsform der Erfindung darstellt, ist der Spanngurt 1 als Band mit zwei Enden 6.1, 6.2 ausgeführt, die zum Verspannen des Spanngurtes 1 miteinander verbunden werden können. Die Verbindung erfolgt beispielsweise über einen Verschluss mit zwei Verschlusshälften 7.1, 7.2, wobei die erste Verschlusshälfte 7.1 am ersten Ende 6.1 und die zweite Verschlusshälfte 7.2 am zweiten Ende 6.2 vorgesehen ist. Wie schematisch in der Einzelheit a der Figur 2 dargestellt ist, bilden die beiden Verschlusshälften 7.1, 7.2 beispielsweise einen Magnetverschluss 7. Wenn hierbei die Verschlusshälften 7.1, 7.2 profiliert ausgeführt sind, sodass sie unter Ausbildung wenigstens einer Hinterschneidung beziehungsweise einer Vielzahl von Hinterschneidungen ineinander eingreifen, so können Zugkräfte besonders sicher aufgenommen werden. Wenn die Profilierung mehrere Rastpositionen ausbildet, wie in der Einzelheit a dargestellt ist, wird zudem ein in der Länge verstellbarer Verschluss für den Spanngurt 1 erreicht, der trotzdem den Vorteil von Hinterschneidungen nutzt.

Bei der Ausgestaltung gemäß der Figur 2 ist der Spanngurt 1 als elastischer Schlauch 8 ausgeführt, der einen Schlauchinnenraum 9 aufweist, in den ein Messsensor 10 über die Eintrittsöffnung 4 eingesetzt werden kann. Der Schlauchinnenraum 9 kann in Längsrichtung des Schlauches 8, welcher der Umfangsrichtung des Spanngurtes 1 entspricht, unterteilt beziehungsweise in einzelne Abschnitte getrennt sein. Im gezeigten Ausführungsbeispiel ist beispielsweise eine Naht 12 vorgesehen, um eine entsprechende Unterteilung zu erreichen, sodass innerhalb des Schlauchinnenraumes 9 eine elastische Tasche 5 für den Messsensor 10 gebildet wird. Alternativ ist auch hier eine Gestaltung ohne Eintrittsöffnung 4 möglich.

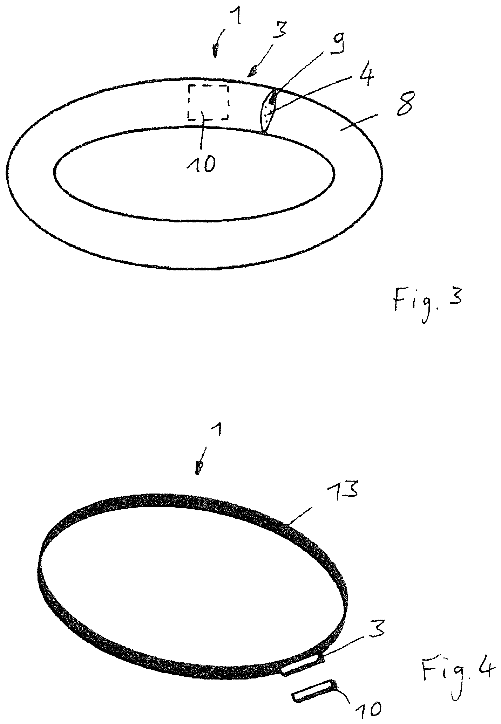

Bei der Ausgestaltung gemäß der Figur 3 ist der bandförmige Spanngurt 1 wiederum als elastischer Schlauch 8 ausgeführt, in dessen Schlauchinnenraum 9 der Messsensor 10 aufgenommen werden kann. Auch hier erfolgt das Einbringen des Messsensors 10 in den Schlauchinnenraum 9 wieder über eine Eintrittsöffnung 4, oder der Messsensor 10 ist nicht entfernbar im Schlauchinnenraum 9 aufgenommen, sodass auf die Eintrittsöffnung 4 verzichtet werden kann.

Bei der Gestaltung der Figur 3 ist der Spanngurt 1 als Endlosband ausgeführt und zugleich der elastische Schlauch 8 als Endlosschlauch, das heißt er weist diesmal keine Unterteilung beziehungsweise Abtrennung des Schlauchinnraumes 9 auf. Alternativ könnte auch bei einem Endlosband wenigstens eine entsprechende Abtrennung vorgesehen sein, um den Schlauchinnenraum 9 in einzelne Abschnitte zu unterteilen, wobei die einzelnen Abschnitte getrennt voneinander sind. Auch hier kann die Eintrittsöffnung 4 dauerhaft verschlossen sein oder auf diese verzichtet werden, je nach Herstellungsverfahren des Schlauches 8, wenn der Messsensor 10 nicht entfernbar im Schlauchinnenraum 9 aufgenommen werden soll.

Bei der Ausgestaltung gemäß der Figur 4 ist der bandförmige Spanngurt 1 als textiles Endlosband 13 ausgeführt, das in Umfangsrichtung des Spanngurtes 1 wenigstens abschnittsweise (siehe die Figur 1) oder vollumfänglich elastisch ist. Das textile Endlosband 13 ist beispielsweise durch Weben oder Wirken hergestellt.

Es ist wiederum eine Aufnahmeeinrichtung 3 für den Messsensor 10 vorgesehen, die beispielsweise in Form einer Tasche, jedoch alternativ auch in Form eines Sockels, ausgeführt sein kann. Diesbezüglich wird auf die Ausführungsformen gemäß den Figuren 1 bis 3 verwiesen und insbesondere auf die dortige Beschreibung der Aufnahmeeinrichtungen 3 beziehungsweise elastischen Taschen 5.

### Bezugszeichenliste

- 1: Spanngurt
- 2: elastischer Abschnitt
- 3: Aufnahmeeinrichtung
- 4: Eintrittsöffnung
- 5: elastische Tasche
- 6.1, 6.2: Enden
- 7: Magnetverschluss
- 7.1, 7.2: Verschlusshälften
- 8: elastischer Schlauch
- 9: Schlauchinnenraum
- 10: Messsensor
- 11: Fahrzeugfelge
- 12: Naht
- 13: textiles Endlosband

## Patentansprüche

1. Befestigungsvorrichtung zum Befestigen eines Messsensors (10), wie Reifendrucksensors, innerhalb eines Reifenhohlraumes an einer Fahrzeugfelge (11),
1.1 mit einem bandförmigen Spanngurt (1), der eine Aufnahmeeinrichtung (3) für den Messsensor (10) aufweist; wobei
1.2 der bandförmige Spanngurt (1) ein elastisches Material umfasst;
wobei
1.3 der bandförmige Spanngurt (1) in Form eines über seinem Umfang geschlossenen nur abschnittsweise elastischen Endlosbandes vorgesehen ist;
**dadurch gekennzeichnet, dass**
1.4 die Aufnahmeeinrichtung (3) durch eine Tasche (5) aus elastischem Material gebildet wird.

2. Befestigungsvorrichtung gemäß Anspruch 1, **dadurch gekennzeichnet, dass** die Tasche (5) integral mit einem elastischen Abschnitt (2) des Endlosbandes ausgeführt ist, wobei der Spanngurt (1) insbesondere aus einem textilen Material hergestellt ist.

3. Befestigungsvorrichtung zum Befestigen eines Messsensors (10), wie Reifendrucksensors, innerhalb eines Reifenhohlraumes an einer Fahrzeugfelge (11),
3.1 mit einem bandförmigen Spanngurt (1), der eine Aufnahmeeinrichtung (3) für den Messsensor (10) aufweist; wobei
3.2 der bandförmige Spanngurt (1) ein elastisches Material umfasst;
**dadurch gekennzeichnet, dass**,
3.3 der bandförmige Spanngurt (1) als elastischer Schlauch (8) aus einem textilen Material ausgeführt ist, dessen Schlauchinnenraum (9) die Aufnahmeeinrichtung (3) für den Messsensor (10) bildet.

4. Befestigungsvorrichtung gemäß Anspruch 3, **dadurch gekennzeichnet, dass** der elastische Schlauch (8) eine Eintrittsöffnung (4), insbesondere auf seiner in Umfangsrichtung radial inneren oder radial äußeren Seite aufweist, wobei der Messsensor (10) über die Eintrittsöffnung (4) in den Schlauchinnenraum (9) einschiebbar ist.

5. Befestigungsvorrichtung gemäß Anspruch 4, **dadurch gekennzeichnet, dass** die Eintrittsöffnung (4) derart in dem elastischen Schlauch (8) ausgeführt ist, dass sie beim Spannen des Schlauches (8) in der Umfangsrichtung des Spanngurtes (1) durch Aufziehen des Spanngurtes (1) auf die Fahrzeugfelge (11) verschlossen wird.

6. Befestigungsvorrichtung gemäß einem der Ansprüche 3 bis 5, **dadurch gekennzeichnet, dass** der elastische Schlauch (8) derart gestaltet ist, dass der Schlauchinnenraum (9) beim Spannen des Schlauches (8) in der Umfangsrichtung des Spanngurtes (1) durch Aufziehen des Spanngurtes (1) auf die Fahrzeugfelge (11) in seinem Querschnitt reduziert wird, um den Messsensor (10) innerhalb des Schlauches (8) zu verspannen.

7. Befestigungsvorrichtung gemäß einem der Ansprüche 3 bis 6, **dadurch gekennzeichnet, dass** der Spanngurt (1) als Endlosband ausgeführt ist.

8. Befestigungsvorrichtung gemäß einem der Ansprüche 3 bis 6, **dadurch gekennzeichnet, dass** der Spanngurt (1) zwei freie Enden (6.1, 6.2) aufweist, die über einen Magnetverschluss (7), insbesondere mit ineinander eingreifenden profilierten Magneten, miteinander verbindbar sind.

9. Befestigungsvorrichtung gemäß einem der Ansprüche 3 bis 8, **dadurch gekennzeichnet, dass** der Schlauchinnenraum (9) in Umfangsrichtung des Spanngurtes (1) in einzelne voneinander getrennte Abschnitte unterteilt ist, insbesondere durch wenigstens eine Naht (12).

10. Befestigungsvorrichtung gemäß Anspruch 9, **dadurch gekennzeichnet, dass** der Schlauchinnenraum (9) einen abgetrennten Abschnitt aufweist, der die Aufnahmeeinrichtung (3) bildet.

11. Befestigungsvorrichtung zum Befestigen eines Messsensors (10), wie Reifendrucksensors, innerhalb eines Reifenhohlraumes an einer Fahrzeugfelge (11),
11.1 mit einem bandförmigen Spanngurt (1), der eine Aufnahmeeinrichtung (3) für den Messsensor (10) aufweist; wobei
11.2 der bandförmige Spanngurt (1) ein elastisches Material umfasst; **dadurch gekennzeichnet, dass**
11.3 der bandförmige Spanngurt (1) als textiles Endlosband (13) ausgeführt ist, das in Umfangsrichtung des Spanngurtes (1) wenigstens abschnittsweise elastisch ist.

12. Befestigungsvorrichtung gemäß Anspruch 11, **dadurch gekennzeichnet, dass** das textile Endlosband (13) gewebt oder gewirkt ist.

13. Befestigungsvorrichtung gemäß einem der Ansprüche 11 oder 12, **dadurch gekennzeichnet, dass** der Spanngurt (1) über seiner gesamten Länge in Umfangsrichtung aus einem elastischen Textil hergestellt ist.

## Claims

1. A fastening apparatus for fastening a measuring sensor (10), such as a tire pressure sensor, within a tire cavity on a vehicle rim (11),
1.1 having a band-shaped tensioning belt (1) which has a receiving device (3) for the measuring sensor (10); wherein
1.2 the band-shaped tensioning belt (1) comprises an elastic material; wherein
1.3 the band-shaped tensioning belt (1) is provided in the form of a continuous endless belt, which is closed on its circumference and is only elastic in sections;
**characterized in that**
1.4 the receiving device (3) is formed by a pocket (5) made of elastic material.

2. A fastening apparatus according to claim 1, **characterized in that** the pocket (5) is integrally formed with an elastic section (2) of the endless belt, wherein the tensioning belt (1) is produced in particular from a textile material.

3. A fastening apparatus for fastening a measuring sensor (10), such as a tire pressure sensor, within a tire cavity on a vehicle rim (11),
3.1 having a band-shaped tensioning belt (1) which has a receiving device (3) for the measuring sensor (10); wherein
3.2 the band-shaped tensioning belt (1) comprises an elastic material;
**characterized in that**
3.3 the band-shaped tensioning belt (1) is designed as an elastic hose (8) made of a textile material, the hose interior (9) of which forms the receiving device (3) for the measuring sensor (10).

4. A fastening apparatus according to claim 3, **characterized in that** the elastic hose (8) has an inlet opening (4), in particular on its radially inner or radially outer side in the circumferential direction, wherein the measuring sensor (10) can be inserted into the hose interior (9) via the inlet opening (4).

5. A fastening apparatus according to claim 4, **characterized in that** the inlet opening (4) is formed in the elastic hose (8) in such a way that it is closed during tensioning the hose (8) in the circumferential direction of the tensioning belt (1) by tightening the tensioning belt (1) onto the vehicle rim (1).

6. A fastening apparatus according to one of the claims 3 to 5, **characterized in that** the elastic hose (8) is designed in such a way that the hose interior (9), when the hose (8) is tensioned in the circumferential direction of the tensioning belt (1), is reduced in its cross-section by tightening the tightening belt (1) onto the vehicle rim (11) in order to brace the measuring sensor (10) within the hose (8).

7. A fastening apparatus according to one of the claims 3 to 6, **characterized in that** the tensioning belt (1) is designed as an endless belt.

8. A fastening apparatus according to one of the claims 3 to 6, **characterized in that** the tensioning belt (1) has two free ends (6.1, 6.2) which can be connected to one another by way of a magnetic closure (7), in particular with mutually engaging profiled magnets.

9. A fastening apparatus according to one of the claims 3 to 8, **characterized in that** the hose interior (9) is subdivided in the circumferential direction of the tensioning belt (1) into mutually separate sections, in particular by at least one seam (12).

10. A fastening apparatus according to claim 9, **characterized in that** the hose interior (9) has a separated section which forms the receiving device (3).

11. A fastening apparatus for fastening a measuring sensor (10), such as a tire pressure sensor, within a tire cavity on a vehicle rim (11),
11.1 having a band-shaped tensioning belt (1) which has a receiving device (3) for the measuring sensor (10); wherein
11.2 the band-shaped tensioning belt (1) comprises an elastic material;
**characterized in that**
11.3 the band-shaped tensioning belt (1) is designed as a textile endless belt (13) which is at least partially elastic in the circumferential direction of the tensioning belt (1).

12. A fastening apparatus according to claim 11, **characterized in that** the endless textile belt (13) is woven or knitted.

13. A fastening apparatus according to one of the claims 11 or 12, **characterized in that** the tensioning belt (1) is made over its entire length in the circumferential direction from an elastic textile.

## Revendications

1. Dispositif de fixation pour fixer un capteur de mesure (10), tel qu'un capteur de pression de pneu, à l'intérieur d'une cavité de pneu sur une jante de véhicule (11),
1.1 comportant une sangle de serrage en forme de bande (1) qui présente un moyen de réception (3) pour le capteur de mesure (10) ;
1.2 la sangle de serrage en forme de bande (1) étant constituée d'un matériau élastique ;
1.3 la sangle de serrage en forme de bande (1) étant prévue sous la forme d'une bande élastique sans fin qui n'est fermée que sur certaines parties sur sa circonférence ;
**caractérisé en ce que**
1.4 le moyen de réception (3) est formé par une poche (5) en matériau élastique.

2. Dispositif de fixation selon la revendication 1, **caractérisé en ce que** la poche (5) est réalisée d'un seul tenant avec une partie élastique (2) de la bande sans fin, la sangle de serrage (1) étant constituée en particulier d'un matériau textile.

3. Dispositif de fixation pour fixer un capteur de mesure (10), tel qu'un capteur de pression de pneu, à l'intérieur d'une cavité de pneu sur une jante de véhicule (11),
3.1 comportant une sangle de serrage en forme de bande (1) qui présente un moyen de réception (3) pour le capteur de mesure (10) ;
3.2 la sangle de serrage en forme de bande (1) étant constituée d'un matériau élastique ;
**caractérisé en ce que**
3.3 la sangle de serrage en forme de bande (1) est réalisée sous la forme d'un tuyau élastique (8) en matériau textile, dont l'intérieur de tuyau (9) forme le moyen de réception (3) pour le capteur de mesure (10).

4. Dispositif de fixation selon la revendication 3, **caractérisé en ce que** le tuyau élastique (8) présente une ouverture d'entrée (4), en particulier sur son côté radialement intérieur ou radialement extérieur dans la direction circonférentielle, le capteur de mesure (10) pouvant être inséré dans l'intérieur de tuyau (9) par l'ouverture d'entrée (4).

5. Dispositif de fixation selon la revendication 4, **caractérisé en ce que** l'ouverture d'entrée (4) est réalisée dans le tuyau élastique (8) de telle sorte qu'elle est fermée lorsque le tuyau (8) est tendu dans la direction circonférentielle de la sangle de serrage (1) par le montage de la sangle de serrage (1) sur la jante (11) du véhicule.

6. Dispositif de fixation selon l'une des revendications 3 à 5, **caractérisé en ce que** le tuyau élastique (8) est conçu de telle sorte que la section transversale de l'intérieur de tuyau (9) est réduite lorsque le tuyau (8) est tendu dans la direction circonférentielle de la sangle de serrage (1) par le montage de la sangle de serrage (1) sur la jante (11) du véhicule, afin de serrer le capteur de mesure (10) à l'intérieur du tuyau (8).

7. Dispositif de fixation selon l'une des revendications 3 à 6, **caractérisé en ce que** la sangle de serrage (1) est réalisée sous la forme d'une bande sans fin.

8. Dispositif de fixation selon l'une des revendications 3 à 6, **caractérisé en ce que** la sangle de serrage (1) présente deux extrémités libres (6.1, 6.2) qui peuvent être reliées entre elles par une fermeture magnétique (7), en particulier avec des aimants profilés s'engageant l'un dans l'autre.

9. Dispositif de fixation selon l'une des revendications 3 à 8, **caractérisé en ce que** l'intérieur de tuyau (9) est divisé dans la direction circonférentielle de la sangle de serrage (1) en différentes parties séparées les unes des autres, en particulier par au moins une couture (12).

10. Dispositif de fixation selon la revendication 9, **caractérisé en ce que** l'intérieur de tuyau (9) présente une partie séparée qui forme le moyen de réception (3).

11. Dispositif de fixation pour fixer un capteur de mesure (10), tel qu'un capteur de pression de pneu, à l'intérieur d'une cavité de pneu sur une jante de véhicule (11),
11.1 comportant une sangle de serrage en forme de bande (1) qui présente un moyen de réception (3) pour le capteur de mesure (10) ;
11.2 la sangle de serrage en forme de bande (1) étant constituée d'un matériau élastique ;
**caractérisé en ce que**
11.3 la sangle de serrage en forme de bande (1) est réalisée sous la forme d'une bande textile sans fin (13) qui est élastique au moins sur certaines parties dans la direction circonférentielle de la sangle de serrage (1).

12. Dispositif de fixation selon la revendication 11, **caractérisé en ce que** la bande textile sans fin (13) est tissée ou tricotée.

13. Dispositif de fixation selon l'une des revendications 11 ou 12, **caractérisé en ce que** la sangle de serrage (1) est constituée d'un textile élastique sur toute sa longueur dans la direction circonférentielle.
